# FASCICULE DE BREVET EUROPEEN

(11) **EP 3 733 466 B1**
(45) Date de publication et mention de la délivrance du brevet: **19.07.2023**
(21) Numéro de dépôt: 20168031.1
(22) Date de dépôt: 03.04.2020
(51) Int. Cl.: B60T 8/17

(54) **PROCEDE D'ALIMENTATION D'UN ACTIONNEUR ELECTROMECANIQUE DE FREINAGE DE ROUE D'AERONEF**
STROMVERSORGUNGSVERFAHREN FÜR ELEKTROMECHANISCHES BREMSSTELLGLIED EINES LUFTFAHRZEUGRADS
METHOD FOR SUPPLYING AN ELECTROMECHANICAL ACTUATOR FOR BRAKING OF AN AIRCRAFT WHEEL

(30) Priorité: 08.04.2019 FR 1903752
(43) Date de publication de la demande: 04.11.2020
(73) Titulaire: Safran Landing Systems, 78140 Vélizy-Villacoublay (FR)
(72) Inventeur: FREY, Olivier, 77550 MOISSY-CRAMAYEL (FR); PITHOUD, Frédéric, 77550 MOISSY-CRAMAYEL (FR); BARTHELEMY, Serge, 77550 MOISSY-CRAMAYEL (FR)
(74) Mandataire: Lavialle, Bruno François Stéphane

(56) Documents cités:
- EP-A1- 2 213 534
- EP-A1- 2 508 398
- EP-A1- 2 724 907
- US-A1- 2007 084 682

## Description

Un aéronef est généralement pourvu de freins pour exercer sélectivement sur certaines de ses roues un couple de freinage propre à ralentir leur rotation et ainsi décélérer l'aéronef lors de ses déplacements au sol.

Certains freins sont munis d'actionneurs électromécaniques (couramment appelés EMAs pour « electromechanical actuators ») comprenant un poussoir déplacé via une transmission mécanique par un moteur électrique pour appliquer sélectivement un effort sur des organes de friction du frein et ainsi générer le couple de freinage.

L'organe gérant l'alimentation en puissance électrique des EMAs de freinage comprend un organe de saturation du courant électrique consommé, afin de protéger le moteur électrique et de limiter les efforts internes.

Les EMAs de freinage sont soumis à des basses températures lors des vols et à des hautes températures résultant de la proximité avec les organes de friction du frein, susceptibles de dégager une importante quantité de chaleur lors des freinages. Des températures relativement basses ou élevées peuvent également être atteintes au sol du fait des conditions météorologiques. La transmission mécanique des EMAs de freinage contient un lubrifiant dont les caractéristiques physiques sont très variables en fonction de la température, de sorte que les EMAs de freinage possèdent des caractéristiques de fonctionnement très dépendantes de la température de fonctionnement. Typiquement, le lubrifiant possède une grande viscosité à froid réduisant les performances mécaniques de l'actionneur. A froid, le moteur électrique doit donc fournir un couple plus élevé qu'à chaud, pour un même effort de presse, et donc fonctionner à courant plus élevé qu'à chaud. Ainsi la saturation de courant électrique d'alimentation doit être réglée à une valeur maximale suffisamment haute pour le cas de fonctionnement à froid. A chaud, le lubrifiant est bien plus fluide et engendre moins de pertes mécaniques. Si le moteur fonctionne alors avec un courant atteignant cette valeur maximale de saturation, les contraintes mécaniques dans la chaîne de transmission mécanique du moteur électrique au poussoir seront donc plus élevées, ce qui oblige à surdimensionner les pièces du moteur électrique et de la transmission mécanique pour le cas de fonctionnement à chaud.

Ainsi l'utilisation optimale des EMAs de freinage dans une large plage de températures impose de surdimensionner plusieurs sous-ensembles des EMAs de freinage, ce qui occasionne une augmentation de la masse et du volume de l'équipement.

Il est en outre connu du document EP2213534 A1 un procédé de commande d'un frein pour aéronef dans lequel la température est prise en compte pour modifier un gain de la boucle d'asservissement.

### OBJET DE L'INVENTION

L'invention vise à proposer un procédé d'alimentation en puissance des EMAs de freinage d'un aéronef permettant d'éviter un tel surdimensionnement.

### RESUME DE L'INVENTION

A cet effet, on propose un procédé d'alimentation en courant électrique d'un actionneur électromécanique de freinage équipant un frein de roue d'aéronef, lors duquel on sature le courant d'alimentation fourni à l'actionneur électromécanique de freinage à une valeur de saturation pour limiter le courant d'alimentation consommé par l'actionneur électromécanique de freinage et ainsi limiter les efforts développés par celui-ci. Selon l'invention, le procédé comporte l'étape de déterminer la valeur de saturation en fonction d'une température interne de l'actionneur électromécanique de freinage durant son fonctionnement.

Ainsi, l'on pourra temporairement augmenter la valeur de saturation Isat lorsque l'on détecte que la température interne de l'actionneur électromécanique de freinage est basse, tandis que l'on pourra baisser cette valeur de saturation Isat lorsque l'actionneur électromécanique de freinage est chaud. Ainsi, l'effort maximal développable par l'actionneur électromécanique de freinage ne risque pas d'augmenter au fur et à mesure que l'actionneur électromécanique de freinage monte en température, ce qui protège l'actionneur électromécanique de freinage et ses composants internes.

Selon un premier mode particulier de mise en œuvre du procédé de l'invention, on mesure une valeur d'un courant d'approche circulant dans le moteur de l'actionneur électromécanique de freinage lors d'une phase d'approche à vitesse donnée, et on ajoute à la valeur mesurée du courant d'approche un complément de courant pour déterminer la valeur de saturation.

Pour une même vitesse de déplacement, le courant d'approche ainsi mesuré à froid sera plus important que le même courant Iapp mesuré à chaud, ce qui est un effet direct de la température interne de l'actionneur électromécanique de freinage. On profite d'un déplacement à vide de l'actionneur électromécanique de freinage, quand le poussoir de celui-ci se dirige vers les éléments de friction du frein, pour effectuer la mesure. On dispose d'un temps suffisant pour que le courant d'approche se stabilise et que la mesure ainsi effectuée soit fiable.

La détermination de la valeur de saturation peut être effectuée à chaque phase d'approche de l'actionneur électromécanique de freinage, c'est-à-dire à chaque freinage.

Selon un autre mode particulier de mise en œuvre du procédé de l'invention, la valeur de saturation est déterminée à l'aide d'une mesure de la température interne de l'actionneur de freinage.

### BREVE DESCRIPTION DES DESSINS

L'invention sera mieux comprise à la lumière de la description qui suit de modes particuliers de mise en œuvre en référence aux figures des dessins annexés parmi lesquelles :
[Fig. 1] La figure 1 est une vue schématique d'un frein d'aéronef connu en soi comportant un actionneur électromécanique de freinage agissant sur des éléments de friction ;
[Fig. 2a] La figure 2a est un graphe d'un courant circulant dans l'actionneur électromécanique de freinage lorsque celui-ci est froid ;
[Fig. 2b] La figure 2b est un graphe d'un courant circulant dans l'actionneur électromécanique de freinage lorsque celui-ci est chaud ;
[Fig. 3] La figure 3 est une vue schématique d'un actionneur électromécanique de freinage monocarter incluant un capteur de température pour la mise en œuvre du procédé de l'invention ;
[Fig. 4] La figure 4 est une vue schématique d'un actionneur électromécanique de freinage bicarter incluant un capteur de température pour la mise en œuvre du procédé de l'invention.

### DESCRIPTION DETAILLEE DE L'INVENTION

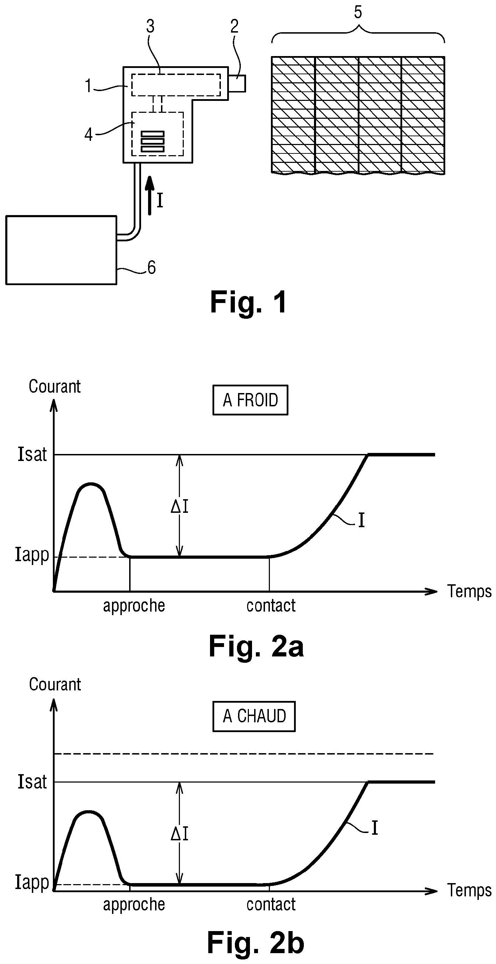

En référence à la figure 1, le procédé de l'invention s'applique à un frein d'aéronef équipé d'au moins un actionneur électromécanique de freinage 1 comprenant un poussoir 2 déplacé via une transmission mécanique 3 par un moteur électrique 4 pour appliquer sélectivement un effort sur des organes de friction 5 du frein et ainsi générer un couple de freinage adapté à ralentir la rotation de la roue associée. Un organe de gestion de l'alimentation en puissance 6 délivre un courant d'alimentation I au moteur électrique 4 pour répondre aux demandes de freinage venant soit du pilote via les pédales de frein, soit d'une unité de commande des freins générant automatiquement une consigne de freinage ou de décélération.

L'organe de gestion de l'alimentation en puissance 6 comporte ici un organe de protection qui limite le courant d'alimentation I appelé par l'actionneur électromécanique de freinage 1 pour éviter tout endommagement de celui-ci à une valeur de saturation nommée ici Isat.

Selon un premier mode particulier de mise en œuvre du procédé de l'invention illustré aux figures 2a et 2b, on mesure le courant d'approche Iapp appelé par l'actionneur électromécanique de freinage 1 lorsque le poussoir 2 s'approche des éléments de friction 5. De préférence, on fait déplacer le poussoir 2 à une vitesse constante prédéterminée pour que les différentes mesures du courant d'approche Iapp se fassent dans des conditions de fonctionnement similaires. Sur les figures, on voit que lors d'une phase d'approche, le courant I appelé par l'actionneur électromécanique de freinage 1 présente un transitoire initial puis se stabilise à une valeur Iapp. Le courant I augmente alors brutalement lorsque le poussoir 2 vient au contact des éléments de friction 5. Pour déterminer la valeur de saturation Isat, on ajoute à une mesure du courant d'approche Iapp un complément de courant ΔI, ce qui permet de fixer une valeur de saturation Isat qui dépend de la température interne puisque le courant d'approche Iapp dépend fortement de ladite température interne. En effet, la figure 2a est relative à un fonctionnement à froid de l'actionneur électromécanique de freinage 1, alors que la figure 2b est relative à un fonctionnement à chaud de l'actionneur électromécanique de freinage. On constate qu'à froid, le courant d'approche Iapp est plus élevé que le même courant d'approche Iapp à chaud, ce qui a pour effet que la valeur de saturation Isat à chaud est plus basse que la valeur de saturation à froid (reportée en pointillés sur la figure 2b). La baisse de la valeur de saturation Isat lorsque l'actionneur électromécanique de freinage 1 est chaud permet d'éviter tout effort trop important susceptible d'endommager l'actionneur électromécanique de freinage.

Selon une première variante, la valeur du complément de courant ΔI est constante et indépendante de la température interne de l'actionneur électromécanique de freinage, ce qui permet une détermination très simple de la valeur de saturation. Selon une variante alternative à la première, on fait dépendre le complément de courant ΔI de la température interne de l'actionneur, par exemple en le fixant à une valeur proportionnelle au courant d'approche. Selon une autre variante, la valeur de saturation Isat ainsi déterminée est ajustée pour être comprise entre une valeur de saturation minimale Imin et une valeur de saturation maximale Imax si la valeur de saturation Isat déterminée selon le procédé de l'invention est en dehors de ces valeurs de courant. L'ajustement peut consister en une limitation de la valeur de saturation Isat à Imin si Isat<Imin, ou à Imax si Isat>Imax.

Selon un deuxième mode particulier de mise en œuvre du procédé de l'invention, on équipe l'actionneur électromécanique de freinage d'un capteur de température permettant de mesurer une température interne T de l'actionneur électromécanique de freinage 1 lors de son fonctionnement, notamment une température du lubrifiant contenu dans la transmission mécanique. Cette mesure de température permet alors de calculer la valeur de saturation Isat en fonction de la température interne de l'actionneur, par exemple en utilisant une table de valeurs implantée en mémoire donnant Isat en fonction des valeurs de T, ou en utilisant une fonction préprogrammée Isat=f(T). Ce calcul peut être fait en permanence, ou à intervalles de temps réguliers.

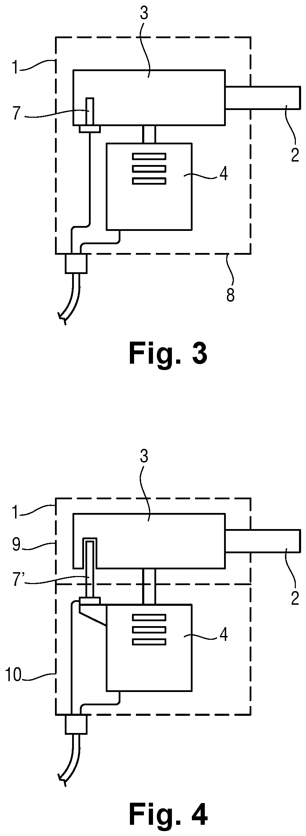

La figure 3 illustre l'implantation d'un capteur de température 7 dans un actionneur électromécanique 1 monocarter, c'est-à-dire dont le moteur électrique 4 et la transmission mécanique 3 sont contenus dans le même carter 8 représenté en pointillés. Le capteur de température 7 est implanté sur la transmission mécanique 3 de façon à mesurer le plus directement possible la température du lubrifiant à l'intérieur de la transmission mécanique 3.

La figure 4 illustre l'implantation d'un capteur de température 7' dans un actionneur électromécanique de freinage 1 bicarter dans lequel le moteur électrique 4 est contenu dans un premier carter 10 et la transmission mécanique 3 et le poussoir 2 sont contenus dans un deuxième carter 9, les carters 9, 10 étant assemblés entre eux pour constituer l'actionneur électromécanique de freinage 1. Dans ce cas, il est préférable que le capteur de température 7' soit solidaire du carter 9 contenant le moteur électrique 3, pour regrouper sa connexion électrique avec celle du moteur électrique 3. On réalise alors une mesure indirecte de la température du lubrifiant de la transmission mécanique, par exemple par conduction au travers du deuxième carter 9.

De préférence, si le frein est muni de plusieurs actionneurs électromécaniques de freinage, on comparera les mesures de températures internes des différents actionneurs électromécaniques de freinage pour détecter et éliminer toute mesure aberrante, et la remplacer par une valeur recevable, par exemple par une moyenne des mesures des températures non éliminées. En variante, on peut également ou alternativement utiliser des températures estimées à partir des courants d'approche Iapp.

L'invention n'est pas limitée à ce qui vient d'être décrit, mais englobe au contraire toute variante entrant dans le cadre défini par les revendications.

En particulier, le frein peut avoir une structure différente de celle décrite et représentée, de même que l'actionneur électromécanique.

Dans le cas où le procédé de l'invention est appliqué à un frein comportant plusieurs actionneurs électromécaniques de freinage 1, le procédé peut comprendre avantageusement les étapes de comparer les valeurs de courants d'approche Iapp des différents actionneurs électromécaniques de freinage 1 pour détecter et éliminer toute valeur aberrante et la remplacer par une valeur corrigée, par exemple par une moyenne des valeurs de courant d'approche non éliminées.

## Revendications

1. Procédé d'alimentation en courant électrique (I) d'un actionneur électromécanique de freinage (1) équipant un frein de roue d'aéronef, lors duquel on sature le courant d'alimentation (I) fourni à l'actionneur électromécanique de freinage (1) à une valeur de saturation (Isat) pour limiter le courant consommé par l'actionneur électromécanique de freinage (1) et ainsi limiter les efforts développés par l'actionneur électromécanique de freinage (1), **caractérisé en ce que** le procédé comporte l'étape de déterminer la valeur de saturation (Isat) en fonction d'une température interne (T) de l'actionneur électromécanique de freinage (1) durant son fonctionnement.

2. Procédé selon la première revendication, dans lequel on mesure une valeur d'un courant d'approche (Iapp) circulant dans le moteur électrique (4) de l'actionneur électromécanique de freinage (1) lors d'une phase d'approche à vitesse donnée, cette valeur dépendant de la température interne de l'actionneur électromécanique de freinage (1), et on ajoute à la valeur mesurée du courant d'approche un complément de courant (ΔI) pour déterminer la valeur de saturation (Isat=Iapp+ΔI).

3. Procédé selon la deuxième revendication, dans lequel le complément de courant (ΔI) est constant et indépendant de la température interne de l'actionneur électromécanique de freinage (1).

4. Procédé selon la deuxième revendication, dans lequel le complément de courant (ΔI) est déterminé en fonction de la température interne de l'actionneur électromécanique de freinage (1) ou en fonction de la valeur du courant d'approche (Iapp).

5. Procédé selon la deuxième revendication, dans lequel on ajuste la valeur de saturation pour qu'elle soit comprise entre une valeur minimale (Imin) et une valeur maximale (Imax) prédéterminées.

6. Procédé selon la revendication 2, appliqué à un frein comportant plusieurs actionneurs électromécaniques de freinage (1), dans lequel on compare les valeurs de courants d'approche (Iapp) des différents actionneurs électromécaniques de freinage (1) pour détecter et éliminer toute valeur aberrante et la remplacer par une valeur corrigée, par exemple par une moyenne des valeurs de courant d'approche non éliminées.

7. Procédé selon la revendication 1, dans lequel on mesure la température interne (T) de l'actionneur électromécanique de freinage (1) et on calcule la valeur de saturation (Isat) au moyen de la température interne.

8. Procédé selon la revendication 7, dans lequel on calcule la valeur de saturation (Isat) en fonction de la température (T) au moyen d'une table de valeurs ou d'une fonction (Isat=f(T)).

9. Procédé selon la revendication 7, appliqué à un actionneur électromécanique monocarter, dans lequel pour déterminer la température interne (T), on dispose un capteur de température (7) pour mesurer directement la température (T) d'un lubrifiant d'une transmission mécanique (3) disposée entre un moteur électrique (4) et un poussoir (2) de l'actionneur électromécanique de freinage (1).

10. Procédé selon la revendication 7, appliqué à un actionneur bicarter ayant un premier carter (10) contenant un moteur électrique (4) de l'actionneur électromécanique de freinage (1) et un deuxième carter (9) contenant une transmission mécanique (3) et un poussoir (2) de l'actionneur électromécanique de freinage (1), dans lequel, pour déterminer la température interne (T), on dispose un capteur de température (7') dans le premier carter (10) pour mesurer indirectement la température (T) d'un lubrifiant de la transmission mécanique (3) contenue dans le deuxième carter (9) .

11. Procédé selon la revendication 7, appliqué à un frein comportant plusieurs actionneurs électromécaniques de freinage (1), dans lequel on compare les mesures de températures internes des différents actionneurs électromécaniques de freinage (1) pour détecter et éliminer toute mesure aberrante et la remplacer par une valeur corrigée, par exemple par une moyenne des mesures de températures non éliminées.

## Patentansprüche

1. Verfahren zur Versorgung eines elektromechanischen Bremsaktors (1), mit dem eine Luftfahrzeugradbremse ausgestattet ist, mit elektrischem Strom, bei dem der Versorgungsstrom (1), der an den elektromechanischen Bremsaktor (1) geliefert wird, auf einen Sättigungswert (Isat) gesättigt wird, um den von dem elektromechanischen Bremsaktor (1) verbrauchten Strom zu begrenzen und so die von dem elektromechanischen Bremsaktor (1) entwickelten Kräfte zu begrenzen, **dadurch gekennzeichnet, dass** das Verfahren den Schritt des Bestimmens des Sättigungswerts (Isat) in Abhängigkeit von einer inneren Temperatur (T) des elektromechanischen Bremsaktors (1) während dessen Betriebs umfasst.

2. Verfahren nach Anspruch 1, bei dem ein Wert eines Annäherungsstroms (lapp) gemessen wird, der in dem Elektromotor (4) des elektromechanischen Bremsaktors (1) während einer Annäherungsphase mit gegebener Geschwindigkeit fließt, wobei dieser Wert von der inneren Temperatur des elektromechanischen Bremsaktors (1) abhängt, und zu dem gemessenen Wert des Annäherungsstroms eine Stromergänzung (ΔI) hinzugefügt wird, um den Sättigungswert (Isat=lapp+ΔI) zu bestimmen.

3. Verfahren nach Anspruch 2, bei dem die Stromergänzung (ΔI) konstant und unabhängig von der inneren Temperatur des elektromechanischen Bremsaktors (1) ist.

4. Verfahren nach Anspruch 2, bei dem die Stromergänzung (ΔI) in Abhängigkeit von der inneren Temperatur des elektromechanischen Bremsaktors (1) oder in Abhängigkeit von dem Wert des Annäherungsstroms (lapp) bestimmt wird.

5. Verfahren nach Anspruch 2, bei dem der Sättigungswert angepasst wird, damit er zwischen einem vorbestimmten Minimalwert (Imin) und einem vorbestimmten Maximalwert (Imax) liegt.

6. Verfahren nach Anspruch 2, angewandt auf eine Bremse, die mehrere elektromechanische Bremsaktoren (1) umfasst, bei dem die Werte der Annäherungsströme (lapp) der verschiedenen elektromechanischen Bremsaktoren (1) verglichen werden, um jeden Ausreißer zu erfassen und zu beseitigen und ihn durch einen korrigierten Wert zu ersetzen, beispielsweise durch einen Mittelwert der nicht beseitigten Annäherungsstromwerte.

7. Verfahren nach Anspruch 1, bei dem die innere Temperatur (T) des elektromechanischen Bremsaktors (1) gemessen wird und der Sättigungswert (Isat) mit Hilfe der inneren Temperatur berechnet wird.

8. Verfahren nach Anspruch 7, bei dem der Sättigungswert (Isat) in Abhängigkeit von der Temperatur (T) mit Hilfe einer Wertetabelle oder einer Funktion (Isat=f(T)) berechnet wird.

9. Verfahren nach Anspruch 7, angewandt auf einen elektromechanischen Aktor mit Einzelgehäuse, bei dem zum Bestimmen der inneren Temperatur (T) ein Temperatursensor (7) vorhanden ist, um die Temperatur (T) eines Schmiermittels eines mechanischen Getriebes (3), das zwischen einem Elektromotor (4) und einem Stößel (2) des elektromechanischen Bremsaktors (1) angeordnet ist, direkt zu messen.

10. Verfahren nach Anspruch 7, angewandt auf einen Aktor mit zwei Gehäusen, der ein erstes Gehäuse (10) hat, das einen Elektromotor (4) des elektromechanischen Bremsaktors (1) enthält, sowie ein zweites Gehäuse (9), das ein mechanisches Getriebe (3) und einen Stößel (2) des elektromechanischen Bremsaktors (1) enthält, bei dem zum Bestimmen der inneren Temperatur (T) ein Temperatursensor (7') in dem ersten Gehäuse (10) vorhanden ist, um die Temperatur (T) eines Schmiermittels des mechanischen Getriebes (3), das in dem zweiten Gehäuse (9) enthalten ist, indirekt zu messen.

11. Verfahren nach Anspruch 7, angewandt auf eine Bremse, die mehrere elektromechanische Bremsaktoren (1) umfasst, bei dem die Messungen der inneren Temperaturen der verschiedenen elektromechanischen Bremsaktoren (1) verglichen werden, um jede Ausreißer-Messung zu erfassen und zu beseitigen und sie durch einen korrigierten Wert zu ersetzen, beispielsweise durch einen Mittelwert der nicht beseitigten Temperaturmessungen.

## Claims

1. A method of electrically powering an electromechanical braking actuator (1) fitted to an aircraft wheel brake, in which the power supply current (I) delivered to the electromechanical braking actuator (1) is saturated to a saturation value (Isat) in order to limit the current consumed by the electromechanical braking actuator (1) and thereby limit the forces developed by the electromechanical braking actuator (1), the method being **characterized in that** it includes the step of determining the saturation value (Isat) as a function of an internal temperature (T) of the electromechanical braking actuator (1) while it is in operation.

2. A method according to claim 1, wherein the value of an approach current (Iapp) flowing through the electric motor (4) of the electromechanical braking actuator (1) during an approach stage at a given speed is measured, which value depends on the internal temperature of the electromechanical braking actuator (1), and an additional current (ΔI) is added to the measured value of the approach current in order to determine the saturation value (Isat=Iapp+ΔI).

3. A method according to claim 2, wherein the additional current (ΔI) is constant and independent of the internal temperature of the electromechanical braking actuator (1) .

4. A method according to claim 2, wherein the additional current (ΔI) is determined as a function of the internal temperature of the electromechanical braking actuator (1) or as a function of the value of the approach current (Iapp) .

5. A method according to claim 2, wherein the saturation value is adjusted so that it lies in the range from a predetermined minimum value (Imin) to a predetermined maximum value (Imax).

6. A method according to claim 2, applied to a brake having a plurality of electromechanical braking actuators (1), wherein the approach current values (Iapp) of the various electromechanical braking actuators (1) are compared in order to detect and eliminate any outlier value, and to replace it with a corrected value, e.g. with an average of the approach current values that have not been eliminated.

7. A method according to claim 1, wherein the internal temperature (T) of the electromechanical braking actuator (1) is measured and the saturation value (Isat) is calculated using the internal temperature.

8. A method according to claim 7, wherein the saturation value (Isat) is calculated as a function of the temperature (T) by using a table of values or a function (Isat=f(T)) .

9. A method according to claim 7, applied to an electromechanical actuator having a single casing, wherein, in order to determine the internal temperature (T), a temperature sensor (7) is arranged to measure directly the temperature (T) of a lubricant of a mechanical transmission (3) arranged between an electric motor (4) and a pusher (2) of the electromechanical braking actuator (1).

10. A method according to claim 7, applied to an actuator having two casings, with a first casing (10) containing an electric motor (4) of the electromechanical braking actuator (1) and a second casing (9) containing a mechanical transmission (3) and a pusher (2) of the electromechanical braking actuator (1), wherein, in order to determine the internal temperature (T), a temperature sensor (7') is arranged in the first casing (10) in order to measure indirectly the temperature (T) of a lubricant of the mechanical transmission (3) contained in the second casing (9).

11. A method according to claim 7, applied to a brake having a plurality of electromechanical braking actuators (1), wherein the internal temperature measurements of the various electromechanical braking actuators (1) are compared in order to detect and eliminate any outlier measurement and replace it with a corrected value, e.g. with an average of the temperature measurements that have not been eliminated.
